# EUROPEAN PATENT APPLICATION

(11) **EP 4 307 539 A1**
(43) Date of publication of application: **17.01.2024**
(21) Application number: 22767468.6
(22) Date of filing: 08.03.2022
(51) Int. Cl.: H02K 7/00, H02K 11/21, H02K 1/278, H02K 1/12

(54) **MOTOR**

(30) Priority: 09.03.2021 KR 20210030848
(71) Applicant: LG Innotek Co., Ltd., Seoul 07796 (KR)
(72) Inventor: KIM, Jin Ho, Seoul 07796 (KR)
(74) Representative: DREISS Patentanwälte PartG mbB
(86) International application number: PCT/KR2022/003254
(87) International publication number: WO 2022/191572

(57) **Abstract**

A motor comprises: a housing; a stator disposed inside the housing; a rotor disposed inside the stator; a shaft disposed in the center of the rotor; and a metal part disposed at one end of the shaft, wherein the shaft and the metal part are formed as one body.

## Description

### [Technical Field]

The present embodiment relates to a motor.

### [Background Art]

The motor generates power while rotating by an interaction between a rotor having a plurality of magnets and an electromagnetic force generated by a coil wound around a stator.

Accordingly, the motor is provided with a shaft being formed to be rotatable, a rotor being coupled to the shaft, and a stator being fixed inside a housing, and the stator is installed with a gap along the circumference of the rotor.

In addition, a coil forming a rotating magnetic field is wound around the stator to induce electrical interaction with the rotor, thereby inducing rotation of the rotor. Therefore, when the rotor rotates, the shaft rotates.

The motor includes sensors for detecting the rotational positions of the rotor and shaft. The sensor may include a metal part being disposed on the rotor or shaft, and a sensing part for detecting the metal part. The metal part can rotate with the rotor or shaft.

The metal part according to the prior art is provided as a separate part, so there is a problem that an additional process for coupling with the rotor or shaft is consumed, and the manufacturing cost increases as the number of parts increases.

### [Detailed Description of the Invention]

### [Technical Subject]

The present embodiment is to provide a motor capable of improving the structure, improving production efficiency, and lowering the manufacturing cost according to the reduction in the number of parts.

### [Technical Solution]

A motor according to the present embodiment comprises: a housing; a stator being disposed inside the housing; a rotor being disposed inside the stator; a shaft being disposed in the center of the rotor; and a metal part being disposed at one end of the shaft, wherein the shaft and the metal part are formed as one body.

It includes a sensor unit being disposed outside the rotor, and the sensor unit and the metal unit may be a motor position sensor (MPS) sensor.

The metal part may include pluralities of wing parts being disposed radially from one end of the shaft, and the pluralities of wing parts may be spaced apart from each other.

Each of the pluralities of wing parts may include: a first side surface; a second side surface facing the first side surface; and an outer circumferential surface connecting the first side surface and the second side surface.

The wing part may have a shape in which a circumferential distance between the first side surface and the second side surface increases as it travels toward the outside.

The curvature of the outer circumferential surface of the wing part may correspond to the curvature of the outer circumferential surface of the shaft.

A separation space is disposed between adjacent wing parts, and the circumferential length of the separation space may be shorter than the circumferential length of the wing part.

The metal part may be bent outward from one end of the rotating shaft, and the metal part and the rotating shaft may be perpendicular to each other.

The rotor includes a rotor core in which a magnet is disposed on an outer circumferential surface; and a cover being coupled to outer surfaces of the rotor core and the magnet.

A motor according to another embodiment comprises: a housing; a stator being disposed inside the housing; a rotor being disposed inside the stator; a shaft being disposed at the center of the rotor; and a sensor for detecting a position of the shaft or the rotor, wherein the sensor includes: a metal part being bent from one end of the shaft; and a sensor unit being disposed outside the rotor and detecting inductance of the metal part.

### [Advantageous Effects]

Through the present embodiment, there are advantages in that the number of parts and the manufacturing process are reduced by the integrated structure between the metal part and the shaft, thereby reducing manufacturing cost and enhancing production efficiency.

### [Brief Description of Drawings]

FIG. 1 is a conceptual diagram of a rotor assembly according to an embodiment of the present invention.
FIG. 2 is a perspective view of a rotor assembly according to an embodiment of the present invention.
FIG. 3 is an exploded perspective view of a shaft and a bearing coupling part according to an embodiment of the present invention.
FIG. 4 is an exploded perspective view of a motor according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

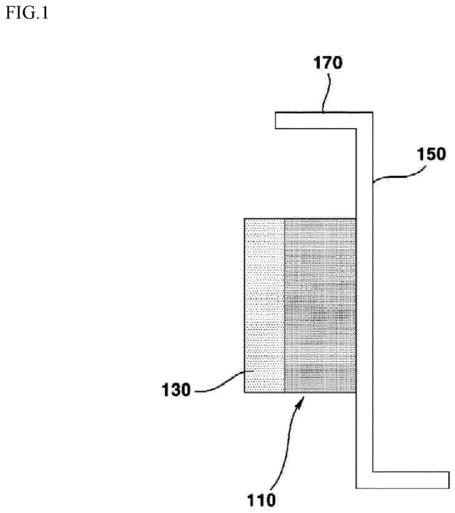

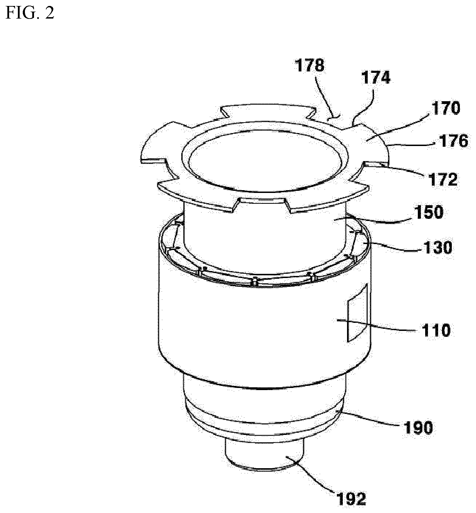

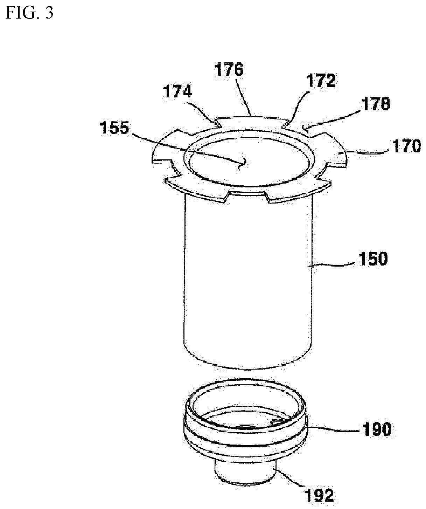

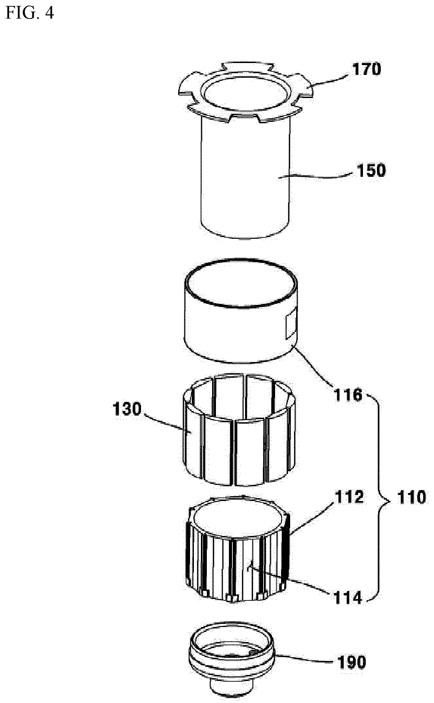

FIG. 1 is a conceptual diagram of a rotor assembly according to an embodiment of the present invention; FIG. 2 is a perspective view of a rotor assembly according to an embodiment of the present invention; FIG. 3 is an exploded perspective view of a shaft and a bearing coupling part according to an embodiment of the present invention; and FIG. 4 is an exploded perspective view of a motor according to an embodiment of the present invention.

Referring to FIGS. 1 to 4, a motor according to an embodiment of the present invention may include a housing (not shown), a stator (not shown) being disposed inside the housing, and a rotor assembly **100** being disposed inside the stator.

The housing forms an outer shape of the motor and may form a space in which the stator and the rotor assembly **100** are disposed. A printed circuit board (not shown) in which elements for driving the motor are disposed may be disposed inside the housing.

The stator is disposed inside the housing and may include a coil. A space may be formed in the center of the stator so that the rotor assembly **100** is disposed.

The rotor assembly **100** may be disposed inside the stator. The rotor assembly **100** may rotate inside the stator. To this end, the rotor assembly **100** may include a magnet **130**. Accordingly, the rotor assembly **100** may rotate by electromagnetic interaction between the magnet **130** and the coil of the stator.

In detail, the rotor assembly **100** may comprise a rotor **110**, a magnet **130**, a shaft **150**, a metal part **170**, and a bearing coupling part **190**.

The rotor **110** may include a rotor core **112** and a cover **116**. The rotor **110** is disposed inside the stator and can rotate.

The rotor core **112** may form the body of the rotor **110**. The rotor core **112** is formed to have a circular cross section, and an opening penetrating the lower surface from the upper surface may be formed in the center. The shaft **150** may be coupled to the opening.

The magnet **130** may be coupled to an outer circumferential surface of the rotor core **112.** A magnet coupling part **114** may be disposed on an outer circumferential surface of the rotor core **112** so that the magnet **130** is coupled thereto. The magnet coupling part **114** may have a groove shape that is recessed more inward than other regions on the outer circumferential surface of the rotor core **112**. The magnet coupling part **114** may be provided in plural and spaced apart from each other along the circumferential direction of the rotor core **112**. Between the adjacent magnet coupling parts **114**, partitions having a shape being protruded more outward than other regions may be disposed. At least a portion of the magnet **130** is accommodated in the magnet coupling part **114**, and both side surfaces may come into contact with the inner surfaces of the partitions.

The magnet **130** may be disposed on an outer surface of the rotor core **112**. The magnets **130** may be provided in plurality and disposed along the circumferential direction of the rotor core **112**. The magnet **130** may be coupled to the rotor core **112** through a separate adhesive. The rotor **110** and the shaft **150** may rotate by electromagnetic interaction between the magnet **130** and the coil.

The cover **116** may be disposed outside the rotor core **112**. The cover **116** may be coupled to cover the outer circumferential surface of the rotor core **112**. The cover **116** may cover the outer surface of the magnet **130**. That is, the magnet **130** may be interposed between the cover **116** and the rotor core **112**. Upper and lower surfaces of the magnet **130** may be exposed to the outside. The cover **116** and the magnet **130** and the cover **116** and the rotor core **112** may be mutually coupled by an adhesive.

The shaft **150** may be disposed at the center of the rotor **110**. The shaft **150** may be coupled by being press-fitted into the central opening of the rotor core **112**. Accordingly, the shaft **150** may rotate together with the rotor **110**. Upper and lower ends of the shaft **150** may be protruded upward and downward from the rotor **110**, respectively.

The material of the shaft **150** may be non-magnetic.

A bearing coupling part **190** may be disposed at a lower end of the shaft **150**. The bearing coupling part **190** may include a protruded portion **192** being protruded downward from other regions. The protruded portion **192** may have a smaller cross-sectional area than other regions. The protruded portion **192** is disposed inside a bearing (not shown), and rotation of the shaft **150** may be supported through the bearing. An outer surface of the protruded portion **192** may be in contact with an inner surface of the bearing inner ring. In addition, a portion of the upper end of the bearing coupling part **190** may be press-fitted into the shaft **150**.

A motor according to the present embodiment may include a sensor. The sensor is for detecting the rotation of the rotor assembly **100** and may include a metal part **170** being disposed at one end of the shaft **150** and a sensor unit for detecting the metal part **170**.

The rotor assembly **100** according to the present embodiment may include a metal part **170**. The metal part **170** may be disposed at one end of the shaft **150**. For example, the metal part **170** may be disposed at an upper end of the shaft **150**. The metal part **170** may be a motor position sensor (MPS) sensor that detects a magnetic signal of the metal part **170** in a non-contact manner together with a sensor unit to be described later. The metal part **170** is formed of a non-magnetic material and may be integrally formed with the shaft **150**. In other words, the metal part **170** may be formed with the shaft **150** as a single body. The shaft **150** and the metal part **170** may be made of a metal material.

The metal part **170** may have a shape being bent outward from an upper end of the shaft **150**. The metal part **170** may be disposed perpendicular to the shaft **150.**

The metal part **170** may include pluralities of wing parts. The plurality of wing parts may be disposed radially from an upper end of the shaft **150.** The plurality of wing parts may be spaced apart from each other along the circumferential direction of the shaft **150**. For example, the number of wing parts may be five. A separation space **178** separating the plurality of wing parts from each other may be disposed between the pluralities of wing parts. With respect to the circumferential direction, the length of the separation space **178** may be shorter than the length of the wing part.

Each of the pluralities of wing parts may include a first side surface **172**, a second side surface **174**, and an outer circumferential surface **176**. The first side surface **172** and the second side surface **174** may be disposed to face each other. The outer circumferential surface **176** may connect the first side surface **172** and the second side surface **174**.

The wing part may have a shape in which a distance in a circumferential direction between the first side surface **172** and the second side surface **174** increases as it travels toward the outside. The curvature of the outer circumferential surface **176** may correspond to the curvature of the outer circumferential surface of the shaft **150**.

The sensor unit is disposed outside the rotor assembly **100** and can detect a change in position of the metal part **170**. The sensor unit may detect the positions of the metal part **170** and the rotor assembly **100** by detecting inductance that changes according to the position change of the metal part **170**. The sensor unit may include a coil or a chip being disposed on a printed circuit board (not shown) being disposed outside the rotor assembly **100**. The sensor unit may be mounted on the printed circuit board.

According to the structure as described above, the number of parts and the manufacturing process are reduced by the integrated structure between the metal part and the shaft, thereby reducing manufacturing cost and enhancing production efficiency.

In the above description, it is described that all the components constituting the embodiments of the present invention are combined or operated in one, but the present invention is not necessarily limited to these embodiments. In other words, within the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas within the equivalent scope should be interpreted as being included in the scope of the present invention.

## Claims

1. A motor comprising:
a housing;
a stator being disposed inside the housing;
a rotor being disposed inside the stator;
a shaft being disposed in the center of the rotor; and
a metal part being disposed at one end of the shaft,
wherein the shaft and the metal part are formed as one body.

2. The motor according to claim 1 including:
a sensor unit being disposed outside the rotor, and the sensor unit,
wherein the metal unit is a motor position sensor (MPS) sensor.

3. The motor according to claim 1,
wherein the metal part includes pluralities of wing parts being disposed radially from one end of the shaft, and
wherein the pluralities of wing parts are spaced apart from each other.

4. The motor according to claim 3,
wherein each of the pluralities of wing parts includes:
a first side surface;
a second side surface facing the first side surface; and
an outer circumferential surface connecting the first side surface and the second side surface.

5. The motor according to claim 4,
wherein the wing part has a shape in which a circumferential distance between the first side surface and the second side surface increases as it travels toward the outside.

6. The motor according to claim 4,
wherein the curvature of the outer circumferential surface of the wing part corresponds to the curvature of the outer circumferential surface of the shaft.

7. The motor according to claim 3,
wherein a separation space is disposed between adjacent wing parts, and
wherein the circumferential length of the separation space is shorter than the circumferential length of the wing part.

8. The motor according to claim 1,
wherein the metal part is bent outward from one end of the rotating shaft, and
wherein the metal part and the rotating shaft are perpendicular to each other.

9. The motor according to claim 1,
wherein the rotor includes:
a rotor core in which a magnet is disposed on an outer circumferential surface; and
a cover being coupled to outer surfaces of the rotor core and the magnet.

10. A motor comprising:
a housing;
a stator being disposed inside the housing;
a rotor being disposed inside the stator;
a shaft being disposed at the center of the rotor; and
a sensor for detecting a position of the shaft or the rotor,
wherein the sensor includes:
a metal part being bent from one end of the shaft; and
a sensor unit being disposed outside the rotor and detecting inductance of the metal part.
